# EUROPÄISCHE PATENTANMELDUNG

(11) **EP 1 869 981 A1**
(43) Veröffentlichungstag der Anmeldung: **26.12.2007**
(21) Anmeldenummer: 06115845.7
(22) Anmeldetag: 21.06.2006
(51) Int. Cl.: A01P 1/00, A01P 3/00, A01N 57/12

(54) **Alkylphospholipide und Lyso-Phospholipide zur Bekämpfung von Pflanzenpathogenen**

(71) Anmelder: Staatliches Weinbauinstitut Freiburg, 79100 Freiburg (DE); KTB-Tumorforschungs GmbH, 79106 Freiburg (DE)
(72) Erfinder: Kassemeyer, Hanns-Heinz, 79100 Freiburg (DE); Massing, Ulrich, 79249 Merzhausen (DE)
(74) Vertreter: Helbing, Jörg

(57) **Zusammenfassung**

Die Erfindung betrifft ein Verfahren zur Bekämpfung von Pflanzenpathogenen umfassend das Ausbringen von Alkylphospholipiden und/oder LysoPhospholipiden als Wirkstoff. Des weiteren betrifft die Erfindung die Verwendung von Alkylphospholipiden und/oder Lysophospholipiden zur Bekämpfung von Pflanzenpathogenen sowie ein Mittel zur Bekämpfung von Pflanzenpathogenen enthaltend eine wirksame Menge mindestens eines Alkylphospholipids und/oder Lysophospholipids.

## Beschreibung

Die Erfindung betrifft ein Verfahren zur Bekämpfung von Pflanzenpathogenen umfassend das Ausbringen von Alkylphospholipiden und/oder LysoPhospholipiden als Wirkstoff. Des weiteren betrifft die Erfindung die Verwendung von Alkylphospholipiden und/oder Lysophospholipiden zur Bekämpfung von Pflanzenpathogenen sowie ein Mittel zur Bekämpfung von Pflanzenpathogenen enthaltend eine wirksame Menge mindestens eines Alkylphospholipids und/oder Lysophospholipids.

### Hintergrund der Erfindung

Pflanzen werden von zahlreichen Pathogenen befallen, die bei Kulturpflanzen zu Ertragsverlusten und zu Verlusten an Qualität des Erntegutes führen. Der Verlust, der durch Pathogene an Kulturpflanzen hervorgerufen wird, beträgt weltweit ca. 20% der Erntemenge, das entspricht einem finanziellen Verlust von über 180 Milliarden U.S. Dollar. Damit die Schäden nicht noch höher ausfallen, werden jährlich 2,5 Millionen Tonnen Pflanzenschutzmittel ausgebracht, die Kosten von über 25 Milliarden U.S. Dollar verursachen. Allein im deutschen Weinbau werden für die Bekämpfung des bedeutendsten Pathogens, der Rebenperonospora *(Plasmopara viticola),* jährlich 175 Tonnen Pflanzenschutzmittel verwendet.

Der Falsche Mehltau *(Plasmopara viticola)* gehört zu den Oomyceten und befällt Blätter und Früchte der Weinrebe, was beträchtlichen Schaden anrichtet. Da der Parasit fast den gesamten Lebenszyklus im Blattinneren verbringt, ist er sehr schwer zu bekämpfen. Häufig werden kupferhaltige Präparate eingesetzt, was nicht nur ökologisch bedenklich, sondern auch nicht besonders wirkungsvoll ist. Ansonsten stehen dem Weinbauern z. Zt. nur Phosphite als Wirkstoffe gegen *P*. *viticola* zur Verfügung. Phosphite haben jedoch den Nachteil, dass sie ökologisch bedenklich sind.

Pflanzenschutzmittel haben meist eine sehr breite Wirkung gegen verschiedenste Pathogene, beeinträchtigen jedoch auch andere Organismen und können empfindliche Störungen im Ökosystem hervorrufen. Die meisten Pflanzenschutzmittel enthalten synthetische Wirkstoffe, die oft Schwermetalle beinhalten oder in denen Chlor gebunden ist. Diese Substanzen und deren Metabolite können leicht ins Grundwasser gelangen oder sich im Boden anreichern. Außerdem sind Rückstände von Pflanzenschutzmitteln auf dem Erntegut aus humantoxikologischen Gründen unerwünscht. Daher sind Umwelt- und Humantoxizität der verwendeten Präparate ein besonderes Problem des heutigen Pflanzenschutzes.

Die meisten Pflanzenschutzmittel wirken direkt auf die Schadorganismen, indem sie in essentielle Lebensvorgänge wie z.B. den Primärstoffwechsel eingreifen. Dadurch lässt sich ihre Wirkung nicht auf eine spezifische Organismenart begrenzen; als Nebeneffekt ihrer Verwendung muss die oben genannte Beeinträchtigung weiterer Organismen des Ökosystems in Kauf genommen werden.

Ein alternativer Ansatz zur Bekämpfung von Pflanzenpathogenen ist die Nutzbarmachung der natürlichen Resistenz der Pflanzen. Alle Pflanzen sind in der Lage, Schaderreger durch Resistenzreaktionen abzuwehren. Einigen dieser Schaderreger, z.B. Rebenperonospora und Echtem Mehltau, gelingt es dennoch, diese Abwehrmechanismen zu überwinden. Bei der Weinrebe wird angenommen, dass die Resistenzreaktionen zu langsam eingeleitet werden, um die Erreger erfolgreich zu unterdrücken. Nicht immer ist es möglich, durch Einkreuzung resistenter Arten Kulturpflanzen mit ausreichender und dauerhafter Resistenz zu züchten. Die Resistenzmechanismen können jedoch in der gesamten Pflanze durch Substanzen induziert werden, die eine Infektion simulieren. Diese systemisch induzierte Resistenz führt zu einer lang anhaltenden Wirkung, die in der Lage ist, nachfolgende Infektionen durch Krankheitserreger abzuwehren.

Eine Aktivierung der pflanzeneigenen Abwehr durch Behandlung der Pflanzen mit Molekülen, die eine Abwehrreaktion auslösen, eröffnet weitere prinzipiell neue Wege im Pflanzenschutz. Auch auf diese Weise können Pflanzenpathogene bekämpft werden, ohne dass konventionelle Pflanzenschutzmittel eingesetzt werden müssen.

Der vorliegenden Erfindung liegt die Aufgabe zugrunde, neue Wirkstoffe zur Bekämpfung von Pflanzenpathogenen bereitzustellen, welche human- und umwelttoxikologisch unbedenklich sind und insbesondere kein Chlor und keine Schwermetalle enthalten. Zudem sollen die erfindungsgemäßen Wirkstoffe gut die Pflanzen erreichen können (gute Bioverfügbarkeit, einfache Anwendbarkeit (Löslichkeit)), wirtschaftlich herstellbar sein, eine gute Lagerstabilität aufweisen und in Pflanze und Boden abbaubar sein. Insbesondere soll ein Wirkstoff zur Bekämpfung von Falschem Mehltau auf Weinreben bereitgestellt werden.

### Kurzbeschreibung der Erfindung

Überraschenderweise wurde nun gefunden, dass Alkylphospholipide (APL) sowie Lyso-Phospholipide als Wirkstoffe zur Bekämpfung von Pflanzenpathogenen geeignet sind. APL, die ursprünglich für die Tumortherapie entwickelt wurden, sind nicht mutagen, nicht teratogen und nicht kanzerogen und damit toxikologisch unbedenklich. Gleiches gilt für die natürlich vorkommenden LysoPhospholipide.

Dieser Befund ist deswegen überraschend, weil keinerlei Hinweise dafür vorlagen, dass diese Substanzen als Wirkstoffe in Pflanzenschutzmitteln einsetzbar sind oder die Resistenz von Pflanzen gegenüber diversen Pathogenen verbessern können.

Die Erfindung betrifft somit
(1) ein Verfahren zur Bekämpfung von Erregern von Pflanzenkrankheiten (Pflanzenpathogenen), umfassend das Ausbringen einer wirksamen Menge mindestens einer Verbindung ausgewählt aus der Gruppe bestehend aus Alkylphospholipiden, Lyso-Phospholipiden und deren Salzen auf die von Pflanzenkrankheiten freizuhaltenden oder mit Pflanzenpathogenen befallenen Pflanzen, auf den Lebensraum der zu behandelnden Pflanzen und/oder auf einen anderen Bereich, in dem die Pflanzenpathogene aufgetreten sind oder auftreten könnten;
(2) die Verwendung eines oder mehrerer Alkylphospholipide oder Lysophospholipide oder ihrer Salze zur Bekämpfung von Erregern von Pflanzenkrankheiten; und
(3) ein Mittel zur Bekämpfung von Erregern von Pflanzenkrankheiten, enthaltend eine wirksame Menge mindestens eines Alkylphospholipids oder Lysophospholipids oder eines ihrer Salze.

### Kurzbeschreibung der Figuren

Die Erfindung wird anhand der nachfolgenden Figur in der detaillierten Beschreibung der Erfindung und den Beispielen näher erläutert.

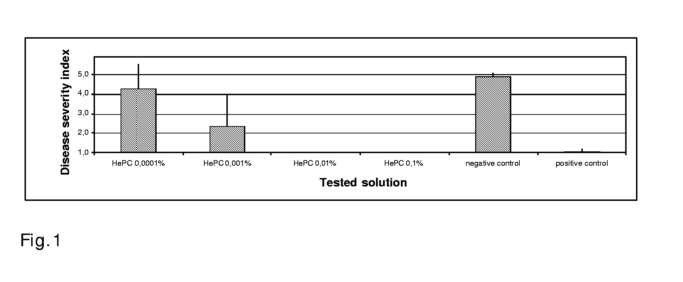

- Fig. 1:: Stärke des Befalls mit Falschem Mehltau auf Blattscheiben, die mit 0,0001 % (w/v), 0,001 % (w/v), 0,01 % (w/v) bzw. 0,1 % (w/v) Hexadecylphosphocholin (HePC) behandelt wurden (vgl. Bsp. 2). Negative control: destilliertes Wasser; positive control: Phosphit

### Detaillierte Beschreibung der Erfindung

Im folgenden werden zunächst einige der verwendeten Begriffe näher definiert:
"Pflanzenpathogene" bzw. "pflanzenpathogene Organismen" sind Organismen, die Pflanzen befallen und Schädigungen bei den Pflanzen hervorrufen können. Derartige Schädigungen führen bei Kulturpflanzen zu Ertrags- und Qualitätsverlusten. Dabei kann es sogar zu einem totalen Ertragsausfall und zu einem vollständigen Absterben der befallenen Pflanze kommen. Pflanzenpathogene Organismen im Sinne der vorliegenden Erfindung umfassen bevorzugt Mikroorganismen, Pilze, Oomyceten, Bakterien und Viren.
"Pflanzenschutzmittel" sind Wirkstoffe und Zubereitungen, die dazu bestimmt sind, Pflanzen, lebende Teile von Pflanzen oder Erzeugnisse von Pflanzen vor Schadorganismen, einschließlich der oben genannten Pflanzenpathogene, zu schützen oder der Einwirkung von Schadorganismen vorzubeugen. Pflanzenschutzmittel sind in der Regel so genannte Zubereitungen, d.h. sie enthalten neben dem eigentlichen Wirkstoff noch Zusätze, die beispielsweise für eine bessere Verteilung des Mittels sorgen sollen. Erfindungsgemäße Pflanzenschutzmittel sind auch sogenannte Pflanzenstärkungsmittel, also Wirkstoffe und Zubereitungen, die dazu bestimmt sind, die Widerstandsfähigkeit von Pflanzen gegen Schadorganismen zu erhöhen. Die Schadorganismen, welche mit den erfindungsgemäßen Pflanzenschutzmitteln bekämpft werden sollen, sind bevorzugt Mikroorganismen, Pilze, Oomyceten, Bakterien und Viren. Die Pflanzenschutzmittel können weiterhin einen oder mehrere Formulierungshilfsstoffe enthalten.
Ein "Wirkstoff" im Sinne der vorliegenden Erfindung ist eine Verbindung, die in Pflanzen oder Pflanzenpathogenen eine physiologische Reaktion hervorrufen kann und so eine Pflanze vor dem Befall durch das Pathogen und/oder der durch das Pathogen ausgelösten Krankheit schützt. Im folgenden bezeichnet der Begriff "Wirkstoff(e)" - soweit nicht anders angegeben - die in der Erfindung verwendeten Verbindungen, also eine oder mehrere Verbindungen aus der Gruppe umfassend Alkylphospholipide, Lyso-Phospholipide und deren Salze.
"Phospholipide" (nachfolgend auch "PL") bestehen in der Regel aus einem hydrophilen Kopf, der über eine negativ geladene Phosphatgruppe mit hydrophoben unpolaren Resten verknüpft ist. Die in biologischen Membranen häufigsten PL sind Glycerophospholipide.
"Alkylphospholipide" (APL) im Sinne der vorliegenden Erfindung sind Phospholipide mit der Struktur 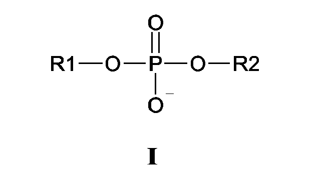 wobei R1 ausgewählt ist aus
   (i) einer C8-C24-Kohlenwasserstoffkette, die gesättigt oder ungesättigt, unverzweigt oder verzweigt ist. Diese Kette kann einen oder mehrere Substituenten tragen, welche unabhängig voneinander ausgewählt sind aus -OR5, -N(R6)ₘ ,-O-C(=O)-R7 und -NH-C(=O)-R7. Dabei sind R5 und R 6 unabhängig voneinander ausgewählt aus -H, und C1-C6-Alkyl, bevorzugt aus -H und C1-C2-Alkyl, ganz besonders bevorzugt aus -H und -CH₃. R7 ist bevorzugt ein C1-C5-Alkyl, besonders bevorzugt Methyl oder Ethyl, ganz besonders bevorzugt Methyl. m ist entweder 2 oder 3, bevorzugt 2. Die Substituenten sind bevorzugt an C-Atome in der Nähe der Phosphatgruppe gebunden, besonders bevorzugt an das zweite C-Atom der Kohlenwasserstoffkette; und
   (ii) einem Glycerolether, welcher ein Mono- oder Di-Ether ist. Es handelt sich dabei um einen Oxo-Ether oder Thioether, bevorzugt um einen Oxo-Ether (also einen Ether im engeren Sinne). Die Ether-Reste sind bevorzugt entweder eine lange Kohlenwasserstoffkette (C16-C24) in einem Monoether, oder ein Paar aus einer langen (C16-C24) und einer kurzen (C1-C4) Kohlenwasserstoffkette in einem Diether. Die Ketten der Etherreste sind verzweigt oder unverzweigt, gesättigt oder ungesättigt. Bevorzugt sind sie unverzweigt und/oder gesättigt. Die Glycerolether sind über die 1-, 2- oder 3-Hydroxylgruppe des Glycerins mit der Phosphatgruppe verbunden; bevorzugt befindet sich die Phosphatgruppe an der *sn*-3-Position.
   Der Rest R2 ist eine polare Gruppe, vorzugsweise ein N- oder O-haltiger 5- oder 6-Ring, eine mit -N(R6)ₘ (Definition wie oben) und/oder -OH substituierte C1-C4-Kette, ein Zuckeralkohol oder eine Aminosäure. Bevorzugt ist er ausgewählt aus Inositol, Cholin, Ethanolamin, Serin oder Stickstoff-Heterozyklen, besonders bevorzugt aus Cholin oder Ethanolamin. Ganz besonders bevorzugt ist Cholin.
   APL mit Chiralitätszentren können im Rahmen der vorliegenden Erfindung in der R- oder S-Konfiguration oder als Racemat verwendet werden.
"Glycerophospholipide" sind wie in Formel (II) gezeigt aufgebaut: 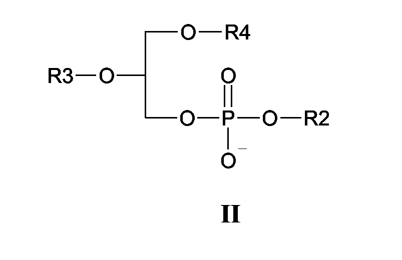 Sie bestehen aus einem hydrophilen Kopf R2, der über eine negativ geladene Phosphatgruppe in *sn*-3-Position mit einem Glycerinrückgrat und darüber mit einem oder zwei hydrophoben unpolaren Resten R3 und R4 verknüpft ist (IUPAC Compendium of Chemical Technology, 2nd ed. (1997)). Letztere sind in der Regel O-Acylreste aus Fettsäuren mit einer Länge von 8 bis 24 C-Atomen, können jedoch auch O-Alkyl- oder *O*-1-Alkenylreste dieser Länge sein. R2 ist wie oben bei APL definiert. Glycerophospholipide mit einem oder zwei *O*-Acylresten werden auch als 1-Acyl-, 2-Acyl- bzw. 1,2-Diacylglycerophospholipide bezeichnet oder pauschal als Acylglycerophospholipide zusammengefasst. Typische Acylglycerophospholipide, aus denen sich die Lyso-Phospholipide für die vorliegende Erfindung herleiten, sind Phosphatidylglycerin, Phosphatidylserin, Phosphatidylethanolamin, Phosphatidylinositol und Phosphatidylcholin.
Ein "Lyso-Phospholipid" (im folgende auch "Lyso-PL") ist ein 1-Acyl- oder 2-Acylglycerophospholipid, das durch Abspaltung eines Acylrestes aus den verschiedenen 1,2-Diacylglycerophospholipiden entstehen kann. Lyso-Phospholipide sind den APL strukturell ähnlich, denn sowohl Lyso-PL als auch APL enthalten eine Phosphatgruppe, die mit einem polaren Rest R2 und einem weiteren, unpolaren Rest verknüpft ist. Dieser weitere Rest ist in Lyso-PL ein Glycerolmonoester, der über eine der Hydroxylgruppen an Position 1, 2 oder 3 des Glycerolrests mit der Phosphatgruppe verknüpft ist, während er in APL ein Alkylrest oder Alkylglycerolether ist (vgl. R1 in Formel (I)). In der Regel befindet sich die Phosphatgruppe an der *sn*-3-Position des Glycerolrests. Lyso-Phospholipide leiten sich größtenteils von natürlichen Glycerophospholipiden ab, bei denen die Fettsäure in der 1- oder 2-Position abgespalten ist. Im Rahmen der vorliegenden Erfindung sind Lyso-Phosphatidylcholin, Lyso-Phosphatidylethanolamin (Lyso-Kephalin), Lyso-Phosphatidylglycerol und Lyso-Phosphatidylserin, deren Ausgangs-Phospholipide sämtlich 1,2-Diacylglycerophospholipide sind, die bevorzugten Lyso-Phospholipide. Lyso-PL werden in der Regel aus natürlich vorkommenden Glycerophospholipiden hergestellt und sind daher meist Gemische aus Lyso-PL mit verschiedenen Resten R2, R3 und R4. Lyso-Phospholipide können in der R- oder S-Konfiguration oder racemisch auftreten, besitzen allerdings in der Regel R-Konfiguration.

Die in der vorliegenden Erfindung eingesetzten APL und Lyso-PL enthalten bevorzugt als R2 einen Cholinrest, sind folglich Alkylphosphocholine (APC) bzw. Lyso-Phosphatidylcholine (Lyso-PC).

Des weiteren bevorzugt ist, dass die APL als R1 und die Lyso-PL als R3 oder R4 mindestens eine C8-C24-Kohlenwasserstoffkette enthalten, welche gesättigt oder ungesättigt, unverzweigt oder verzweigt ist. Besonders bevorzugt ist diese Kette unverzweigt und insbesondere zusätzlich auch gesättigt, also ein C8-C24-Alkyl. Die Kettenlänge ist bevorzugt C14-C20, besonders bevorzugt C16-C18 Ganz besonders bevorzugt ist R1 bzw. R3 oder R4 Hexadecyl (C16) oder Octadecyl (C18).

Von den Lyso-PL und APL sind die APL für den erfindungsgemäßen Einsatz bevorzugt. Besonders bevorzugt sind wiederum APC wie in den vorhergehenden Absätzen definiert. Ganz besonders bevorzugt sind APL ausgewählt aus der Gruppe umfassend Hexadecylphosphocholin (HePC), Octadecyl-(1,1-dimethyl-4-piperidylio)phosphat (Perifosin), 1-O-Octadecyl-2-O-methyl-rac-glycero-3-phosphocholin (Et-18-OCH3, Edelfosin), 1-Hexadecylthio-2-methoxymethyl-racglycero-3-phosphocholin (Ilmofosin), Erucylphosphocholin (ErPC), Erucyl-(N,N,N-trimethyl)-propanolamin-phosphat (ErPC3), 1-O-Phosphocholino-2-N-acyl-octadecan und 1-O-Phosphocholino-2-O-acyl-octadecan (Massing, U. und Eibl, H., Chem. Phys. Lipids 69:105-120 (1994)), und 1-O-Phosphocholino-2-O-methyl-octadecan (WO 2006/024675). Am bevorzugtesten ist HePC.

Kommt ein Lyso-PL erfindungsgemäß zum Einsatz, so ist es bevorzugt ein Lyso-PC, besonders bevorzugt ein Lyso-PC wie in den vorhergehenden Ansätzen definiert. Ganz besonders bevorzugt sind Lyso-PC mit einem Hexadecyl- oder Octadecylrest als R3 oder R4.

Das erfindungsgemäße Verfahren dient dem Schutz von Pflanzen gegen Befall durch Pathogene, bevorzugt dem Schutz vor und der Bekämpfung von Pflanzenkrankheiten, die durch Viren, Bakterien, Pilze und pilzähnliche Organismen (Oomyceten) verursacht werden. Die Alkylphospholipide und Lyso-Phospholipide werden erfindungsgemäß insbesondere zum Schutz von Kulturpflanzen vor weitverbreiteten Krankheiten (*Phytophthora* an Kartoffeln, Schorf an Äpfeln, Echter oder Falscher Mehltau an Zierpflanzen (insbesondere Rosen), Wein und Getreide, und weiteren wirtschaftlich bedeutenden Krankheiten an Obst, Gemüse und Getreide), und vor allem zum Schutz der Weinrebe gegen Falschen Mehltau (Rebenpronospora) und Echten Mehltau (*Uncinula necator*) eingesetzt. Sie sind umweltfreundlich und eignen sich aufgrund ihres toxikologischen Profils vor allem auch für den ökologischen Landbau.

APC wurden bislang für therapeutische Zwecke eingesetzt, überwiegend als Antitumormittel (Beispiele: HePC (Miltefosin), 1-O-Octadecyl-2-O-methyl-*sn-*glycero-3-phosphorylcholin (Et-18-OCH3; Edelfosin), Ilmofosin, Perifosin, ErucylPC3 etc.). Miltefosin ist als Hautsalbe gegen Hautmetastasen und als orales Arzneimittel gegen Leishmaniose zugelassen. Derzeit sind verschiedene APL in der klinischen Erprobung gegen Tumorerkrankungen (Perifosin, ErucylPC3). Der Wirkmechanismus, auf dem die antitumorale Wirkung der APC beruht, ist wahrscheinlich in vielen Tumorzellen die Induktion der Apoptose durch Aktivierung des FAS-Rezeptors (CD95), teilweise wohl auch eine Hemmung der Phospholipid-Biosynthese und des Phospholipid-Abbaus. Der Mechanismus der Anti-Leishmaniose-Wirkung ist nicht bekannt.

Die vorstehend erwähnten Wirkstoffe, also APL, Lyso-PL und deren Salze, zeichnen sich in einem Aspekt der Erfindung durch Wirksamkeit gegen pflanzenpathogene Pilze und Oomyceten aus. Sie sind also zur Bekämpfung dieser Pflanzenpathogene geeignet. Sie lassen sich vor allem zur Bekämpfung von phytopathogenen Pilze wie Plasmodiophoromycetes, Oomycetes, Chytridiomycetes, Zygomycetes, Ascomycetes, Basidiomycetes, und Deuteromycetes einsetzen. Bevorzugt ist ihr Einsatz zur Bekämpfung von Oomyceten, besonders bevorzugt der Ordnung Peronosporales, ganz besonders bevorzugt der Familie Peronosporaceae, und hier vor allem der Plasmopora-Arten, insbesondere von *P*. *viticola.*

Die vorstehend erwähnten Wirkstoffe sind in einem weiteren Aspekt der Erfindung zur Bekämpfung von Bakterien geeignet. Sie lassen sich vor allem zu Bekämpfung von phytopathogenen Bakterien wie Essigsäurebakterien (Erreger der Traubenfäule) einsetzen.

Die Wirkung der erfindungsgemäßen Wirkstoffe gegen Pilze und Oomyceten führt dazu, dass die bevorzugteste Verwendung der Wirkstoffe in der Bekämpfung von phytopathogenen Pilzen und von Pilzbefall an Pflanzen oder Pflanzenteilen (wie Samen) liegt, und hier insbesondere in der Bekämpfung von Pilzen und Oomyceten, vor allem von Oomyceten der Ordnung Peronosporales sowie Echtem Mehltau und *Botrytis cinerea.* Besonders bevorzugt ist die Verwendung zur Bekämpfung von Oomyceten der Familie Peronosporaceae, und hier vor allem von Plasmopora-Arten, insbesondere von *P. viticola.*

Die vorstehend erwähnten Wirkstoffe sind in einem weiteren bevorzugten Aspekt der Erfindung systemisch wirksam und lassen sich als Blatt- und Boden-Pflanzenschutzmittel einsetzen. Sie sind bevorzugt Blatt-Pflanzenschutzmittel, da hierfür geringere Mengen pro behandeltem Areal eingesetzt werden müssen, um die gewünschte Wirkung zu erzielen.

Die zu schützende Pflanze im Rahmen der vorliegenden Erfindung ist entweder bereits mit dem Pflanzenpathogen befallen oder soll von ihm freigehalten werden. Sie ist bevorzugt eine Kulturpflanze wie Getreide, Reis, Mais, Soja, Rasen, Baumwolle, Kaffee, Zuckerrohr, Wein, Obst- und Zierpflanzen, Gemüsepflanzen. Besonders bevorzugt ist die Pflanze eine für Echten oder Falschen Mehltau anfällige Pflanze, insbesondere Rose oder Wein. Ganz besonders bevorzugt ist die zu schützende Pflanze eine Weinrebe (*Vitis vinifera*).

Speziell eignen sich die vorstehend erwähnten Wirkstoffe zur Bekämpfung der folgenden Pflanzenkrankheiten an speziellen Pflanzen: Echter Mehltau (*Erysipe necator* bzw. *Uncinula necator),* Falscher Mehltau *(Plasmopara viticola)* und Botrytis (Grauschimmel; *Botrytis cinerea)* an Nutz- und Zierpflanzen, besonders an Reben.

Das erfindungsgemäße Verfahren umfasst die Behandlung des Pflanzenpathogens, der zu schützenden Pflanze und/oder dessen/deren Lebensraums mit dem erfindungsgemäßen Mittel enthaltend Alkylphospholipide, Lyso-Phospholipide und/oder deren Salze. Des weiteren können Pflanz- und Saatgut, Böden, Flächen, Materialien oder Räume, die von Pflanzenpathogenen freigehalten werden sollen, mit dem erfindungsgemäßen Mittel behandelt werden. Es ist eine Behandlung sowohl der oberirdischen Pflanzenteile als auch des Bodens möglich. Bevorzugt ist die Behandlung von oberirdischen Pflanzenteilen.

Die vorstehend erwähnten Wirkstoffe werden erfindungsgemäß angewendet, indem man die Pflanzenpathogene, die von ihnen freizuhaltenden Pflanzen und/oder Areale mit einer wirksamen Menge der Wirkstoffe behandelt. Die Anwendung erfolgt vor oder nach dem Befall mit dem Pathogen, bevorzugt jedoch vor dem Befall.

Das Ausbringen der Wirkstoffe bzw. des erfindungsgemäßen Mittels erfolgt in üblicher Weise, also unter anderem durch Giessen, Verspritzen, Versprühen, Verstreuen, Verstreichen, Beizen oder Inkrustieren.

Das Mittel gemäß Ausführungsform (3) ist ein Pflanzenschutzmittel, bevorzugt ein Mittel zur Bekämpfung von Pflanzenpathogenen, insbesondere von Pilzen, Oomyceten, Bakterien und/oder Viren. Es ist eine Zubereitung, die neben dem eigentlichen Wirkstoff noch einen oder mehrere Hilfsstoffe enthalten kann, insbesondere Formulierungsmittel. Bevorzugt enthält es die erfindungsgemäßen Wirkstoffe als einzige Wirkstoffe zur Bekämpfung von Pflanzenpathogenen.

Die vorstehend erwähnten Wirkstoffe können in den im Pflanzenschutz üblichen Formulierungen verwendet werden, wie Emulsionen, Lösungen, Suspensionen, Pulver, Granulate, Hüllmassen für Saatgut. Die Herstellung solcher Formulierungen erfolgt durch übliche Verfahren wie Verstrecken des erfindungsgemäßen Wirkstoffs mit Trägerstoffen oder Lösungsmitteln, ggf. unter Verwendung von Formulierungshilfsmitteln wie Emulgatoren oder Dispergiermitteln.

Das erfindungsgemäße Mittel enthält im allgemeinen von 0,1 bis 100 Gew.-% der vorstehend erwähnten Wirkstoffe, bevorzugt von 0,5 bis 90 Gew.-%, besonders bevorzugt von 1 bis 10 Gew.-%. Es enthält bevorzugt die vorstehend erwähnten Wirkstoffe als einzige Wirkstoffe. Das Mittel kann als solches, in Form der oben genannten Formulierungen oder der daraus bereiteten Anwendungsformen wie gebrauchsfertigen Lösungen, und Konzentraten angewendet werden.

Vor dem Ausbringen der Wirkstoffe oder Formulierungen können diese noch zu geeigneten Anwendungsformen aufbereitet werden, insbesondere durch Herstellung gebrauchsfertiger Lösungen. Die Anwendungsformen richten sich nach dem Verwendungszweck, der Art, dem Ort und den äußeren Umständen der Ausbringung. Sie sollte vorteilhafterweise die feine Verteilung der erfindungsgemäßen Wirkstoffe über das behandelte Areal gewährleisten. Normalerweise werden die Pflanzen mit den Wirkstoffen besprüht.

Die Wirkstoffkonzentrationen in den letztlich ausgebrachten Anwendungsformen richten sich nach dem zu behandelnden Objekt. Bei der Behandlung von oberirdischen Pflanzenteilen mit einer Lösung hat die Verbindung in der ausgebrachten Lösung eine Konzentration von wenigstens 0,0001 % (w/v), bevorzugt von wenigstens 0,001 % (w/v), besonders bevorzugt von 0,01 % (w/v). Die maximale Konzentration ist bevorzugt 1 % (w/v).

Die Aufwandmengen liegen je nach Art des gewünschten Effekts von 0,025 bis 2 kg Wirkstoff, vorzugsweise von 0,1 bis 1 kg Wirkstoff pro ha behandeltes Areal. Bei der Saatgutbehandlung werden Wirkstoffmengen von 0,001 bis 50, vorzugsweise von 0,01 bis 10 g je kg Saatgut verwendet.

Ganz besonders bevorzugt betrifft die vorliegende Erfindung ein Verfahren zur Bekämpfung von *Plasmopara viticola* auf Weinreben (*Vitis vinifera*) durch Ausbringen einer wirksamen Menge HePC auf die Weinreben. Denn in einem Testsystem mit Zellkulturen der Weinrebe (*Vitis vinifera* cv. Blauer Spätburgunder) wurde nach der Methode von Felix, J. et al., Plant J. 4:307-316 (1993) festgestellt, dass Alkylphospholipide eine Öffnung von lonenkanälen in der äußeren Membran pflanzlicher Zellen verursachen können. Dies ist ein Indiz dafür, dass durch APL pflanzeneigene Resistenzreaktionen induziert werden können. APL oder eine APL enthaltende Zubereitung wäre in diesem Falle ein Pflanzenstärkungsmittel.

In einem weiteren Test wurde eine Wirkung von Alkylphospholipiden auf den Erreger der Rebenperonospora *(Plasmopara viticola)* festgestellt. Bei diesem Test wurden Weinblattscheiben mit verschiedenen Konzentrationen der Testsubstanzen behandelt und anschließend mit einer definierten Menge an Sporen von *Plasmopara viticola* inokuliert. Der Ausbruch der Sporangien, welcher nach der Infektion und Inkubationszeit das dritte Stadium einer Rebenperonospora-Erkrankung ist, wurde beobachtet. Die Auswertung ergab, dass APL Wein gegen *P. viticola-Befall* schützen können. Die Ergebnisse lassen den Schluss zu, dass Alkylphospholipide und die den APL strukturell sehr ähnlichen Lyso-Phospholipide entweder die pflanzliche Resistenz aktivieren oder eine direkte Wirkung auf das Pathogen haben, z.B. eine Schädigung der Pathogen-Membranen hervorrufen.

Die Erfindung wird anhand der nachfolgenden Beispiele näher erläutert, die jedoch die Erfindung nicht einschränken.

### Beispiele

In den folgenden Beispielen wurden in pflanzenbiochemischen Labors gängige Methoden eingesetzt, u.a. zur Anzucht und Erhaltung von Pflanzen, Pflanzenzellkulturen und Kalluskulturen und zur Herstellung des als Referenz verwendeten Hefeextrakts.

### Beispiel 1: Untersuchung der potentiellen Resistenzinduktion in Einzelzellkulturen der Rebe

Eine Reaktion von Pflanzenzellen auf Substanzen, die Resistenz in Pflanzen induzieren können, ist das Öffnen von Ionenkanälen in der Zellmembran. Daraufhin strömen Protonen in das Zellinnere, was eine Alkalisierung des die Zelle umgebenden Mediums bewirkt. Diese zeitlich begrenzte Alkalisierung wurde gemessen.

Als Ausgangsmaterial dienten Gewächshauspflanzen der Sorte Spätburgunder (*Vitis vinifera* cv. Pinot noir). Aus jungen Trieben wurde zunächst eine Kalluskultur angelegt. Dazu wurden die Pflanzenteile in ca. 1-2 cm große Stücke zerschnitten, in 70 % (v/v) Ethanol gewaschen und für ca. 2 min in 3,5 % (w/v) NaOCl-Lösung sterilisiert. Die sterilisierten Gewebestücke wurden auf festes MS-Nährmedium (Murashige, T. und Skoog, F., Physiol. Plant. 18:100-127 (1962)) übertragen und leicht in den Agar eingedrückt, so dass die Schnittstellen in Kontakt mit dem Medium kamen. Die Bildung von Kallusgewebe erfolgte bei 23 °C in einer Phytokammer (16 h weisses Licht 300 µmol m⁻² s⁻¹ ; 8 h Dunkel; > 95 % relative Luftfeuchte). An den Schnittstellen bildeten sich Kalli, die mehrfach nach 4-6 Wochen steril auf neues Medium überführt wurden.

Ausgehend von gut wachsenden Kalluskulturen wurden Einzelzellkulturen angelegt. Hierzu wurden Zellen von Kallusgewebe unter sterilen Bedingungen in flüssiges MS-Nährmedium überimpft. Die Zellkulturen wurden im Konstantraum bei 23 °C auf einem Rotationsschüttler (120 rpm) angezogen. In regelmäßigen Überimpfzyklen von 4 Tagen wurden die Zellkulturen mit 40 ml neuem flüssigen MS-Nährmedium versetzt und in gleichen Teilen von ca. 40 ml auf zwei 250 ml Erlenmeyerkolben verteilt.

Zur Messung des pH-Wertes des Mediums wurden 10 ml einer 2 Tage alten Zellkultur in ein kleines Rollrandglas gegeben. Das Rollrandglas wurde auf einen Schüttler gestellt und eine pH-Elektrode in die Zellkultur eingetaucht. Die Elektrode wurde so fixiert, dass sie stets von der Zellkultur umspült wurde. Die Umdrehungszahl des Schüttlers betrug 140 rpm. Nachdem sich der gemessene pH-Wert stabilisiert hatte, wurde die zu testende Substanz zugegeben und die Änderung des pH-Wertes kontinuierlich mit einem Schreiber aufgezeichnet.

Die Ergebnisse für Hexadecylphosphocholin sind in Tab. 1 wiedergegeben:

**Tab. 1: pH-Änderung im Medium einer Einzelzellkultur von Vitis vinifera cv. Pinot noir nach Zugabe von Hexadecylphosphocholin (HePC)**

| HePC-Endkonzentration | Δ (pH) |
|---|---|
| 0,00100 % (w/v) | 0,41 |
| 0,00075 % | 0,25 |
| 0,00050 % | 0,16 |
| 0,00025 % | 0,03 |
| 0,00000 % | 0 |

| Positivkontrolle (Hefeextrakt) | |
|---|---|
| 0,0001 % (1 µg/ml) | 0,21 |

Es ist eine Erhöhung des pH-Werts des Mediums, also eine Alkalisierung, mit steigenden HePC-Konzentrationen feststellbar.

### Beispiel 2: Test von HePC zur Bekämpfung des Erregers des falschen Mehltaus der Rebe

Als Ausgangsmaterial dienten Gewächshauspflanzen der Sorte Müller Thurgau (*Vitis vinifera* cv. Müller-Thurgau). Junge Blätter wurden mit 70 % (v/v) Ethanol oberflächensterilisiert. Anschließend wurden daraus Blattscheiben mit 16 mm Durchmesser ausgestanzt und mit der Oberseite nach unten auf Wasseragar (0,8 %) in lichtdurchlässige Boxen gelegt. Ein Tropfen (ca. 60 µl) einer wässrigen Testlösung (verwendete Konzentrationen siehe Fig. 1) wurde 24 h vor der Infektion mit dem Erreger des falschen Mehltaus *(Plasmopara viticola)* appliziert und die Blattscheiben bei 25 °C (16 h weisses Licht 300 µmol m⁻² s⁻¹; 8 h Dunkel) und > 95 % relative Luftfeuchte inkubiert. Nach 24 h wurde der Tropfen abgenommen und durch einen Tropfen mit Sporen des Erregers (ca. 50 µl einer wässrigen Suspension enthaltend 2 x 10⁵ Sporangien/ml) ersetzt. Sechs Tage nach der Infektion wurde die Befallsstärke bestimmt.

Die Befallsstärke wurde mittels einer fünfstufigen Skala bestimmt, die von 1 (keine Sporulation) bis 5 (flächendeckende Sporulation) reicht. Für jede Substanz und Konzentration wurden 10 Blattscheiben pro Versuch ausgewertet und der Mittelwert aus mindestens drei unabhängigen Parallelversuchen bestimmt. Destilliertes Wasser und Phosphit dienten als Negativ- bzw. Positiv-Kontrolle.

Die Ergebnisse für HePC sind in Fig. 1 wiedergegeben. Die Einzelergebnisse zeigt Tab. 2:

**Tab. 2:**

| Testverbindung | Zahl Blattscheiben | 1 | 2 | 3 | 4 | 5 | Durchschnitt Befallsstärke |
|---|---|---|---|---|---|---|---|
| HePC 0,0001 % | 9 | 0 | 0 | 0 | 0 | 9 | 5,0 |
| HePC 0,0001 % | 9 | 0 | 2 | 6 | 1 | 0 | 2,9 |
| HePC 0,0001 % | 9 | 0 | 0 | 0 | 0 | 9 | 5,0 |
| | | | | | | | |
| HePC 0,001 % | 9 | 0 | 1 | 3 | 4 | 1 | 3,6 |
| HePC 0,001% | 9 | 9 | 0 | 0 | 0 | 0 | 1,0 |
| HePC 0,001 % | 9 | 0 | 1 | 2 | 3 | 3 | 3,9 |
| HePC 0,001% | 9 | 9 | 0 | 0 | 0 | 0 | 1,0 |
| | | | | | | | |
| HePC 0,01% | 9 | 9 | 0 | 0 | 0 | 0 | 1,0 |
| HePC 0,01% | 9 | 9 | 0 | 0 | 0 | 0 | 1,0 |
| HePC 0,01% | 9 | 9 | 0 | 0 | 0 | 0 | 1,0 |
| HePC 0,01% | 9 | 9 | 0 | 0 | 0 | 0 | 1,0 |
| HePC 0,01% | 9 | 9 | 0 | 0 | 0 | 0 | 1,0 |
| HePC 0,01% | 9 | 9 | 0 | 0 | 0 | 0 | 1,0 |
| | | | | | | | |
| HePC 0,1% | 9 | 9 | 0 | 0 | 0 | 0 | 1,0 |
| HePC 0,1% | 9 | 9 | 0 | 0 | 0 | 0 | 1,0 |
| HePC 0,1% | 9 | 9 | 0 | 0 | 0 | 0 | 1,0 |
| HePC 0,1% | 9 | 9 | 0 | 0 | 0 | 0 | 1,0 |
| HePC 0,1% | 9 | 9 | 0 | 0 | 0 | 0 | 1,0 |
| HePC 0,1% | 9 | 9 | 0 | 0 | 0 | 0 | 1,0 |
| | | | | | | | |
| negative control (Wasser) | 9 | 0 | 0 | 0 | 0 | 9 | 5,0 |
| negative control (Wasser) | 17 | 0 | 0 | 2 | 1 | 14 | 4,7 |
| negative control (Wasser) | 27 | 0 | 0 | 0 | 1 | 26 | 5,0 |
| | | | | | | | |
| positive control (Lebosol 0,2%) | 26 | 26 | 0 | 0 | 0 | 0 | 1,0 |
| positive control (Lebosol 0,2%) | 9 | 8 | 0 | 1 | 0 | 0 | 1,2 |
| positive control (Lebosol 0,2%) | 9 | 9 | 0 | 0 | 0 | 0 | 1,0 |
| positive control (Lebosol 0,2%) | 8 | 8 | 0 | 0 | 0 | 0 | 1,0 |

| | | | | | | | |
|---|---|---|---|---|---|---|---|
| Lebosol enthält 24,2 % P₂O_{5.} Lebosol 0,2 % enthält 0,2 % Lebosol, also ca. 0,05 % Phosphit. | | | | | | | |

Daraus ergeben sich die folgenden Durchschnittswerte für die Befallsstärke:

| | |
|---|---|
| HePC 0,0001% | 4,3 |
| HePC 0,001% | 2,4 |
| HePC 0,01% | 1,0 |
| HePC 0,1% | 1,0 |
| negative control | 4,9 |
| positive control | 1,1 |

Eine Befallsstärke von weniger als 2,5 zeigt eine gute Abwehr von *P. viticola* an.

## Patentansprüche

1. Verfahren zur Bekämpfung von Erregern von Pflanzenkrankheiten (Pflanzenpathogenen), umfassend das Ausbringen einer wirksamen Menge mindestens einer Verbindung ausgewählt aus der Gruppe bestehend aus Alkylphospholipiden, Lyso-Phospholipiden und deren Salzen auf die von Pflanzenkrankheiten freizuhaltenden oder mit Pflanzenpathogenen befallenen Pflanzen, auf den Lebensraum der zu behandelnden Pflanzen und/oder auf einen anderen Bereich, in dem die Pflanzenpathogene aufgetreten sind oder auftreten könnten.

2. Verfahren nach Anspruch 1, wobei die Pflanze eine Kulturpflanze, bevorzugt eine Weinrebe ist.

3. Verfahren nach Anspruch 1 oder 2, wobei die Verbindung ein Alkylphospholipid oder dessen Salz ist, und wobei dieses Alkylphospholipid bevorzugt ein Alkylphosphocholin ist.

4. Verfahren nach Anspruch 3, wobei das Alkylphospholipid als Alkylrest eine gesättigte C16-C24-Kohlenwasserstoffkette enthält und bevorzugt Hexadecylphosphocholin (HePC) ist.

5. Verfahren nach Anspruch 1 oder 2, wobei die Verbindung ein Lyso-Phospholipid ist, und wobei dieses Lyso-Phospholipid bevorzugt ein Lyso-Phosphatidylcholin ist.

6. Verfahren nach einem oder mehreren der Ansprüche 1 bis 5, wobei das Pflanzenpathogen ausgewählt ist aus der Gruppe umfassend Mikroorganismen, Viren, Oomyceten, Pilze und Bakterien, und bevorzugt ein Pilz oder Oomycet, besonders bevorzugt ein Erreger des Echten oder Falschen Mehltaus ist.

7. Verfahren nach Anspruch 2, wobei die Pflanze *Vitis vinifera,* das Pflanzenpathogen *Plasmopara viticola* ist und die Verbindung Hexadecylphosphocholin ist.

8. Verfahren nach einem oder mehreren der Ansprüche 1 bis 7, wobei das Ausbringen durch Besprühen, Einbringen in den Boden, Zufuhr durch Bewässerung, Behandlung der Pflanzenoberfläche, bevorzugt durch Besprühen oder Behandlung der Pflanzenoberfläche erfolgt.

9. Verfahren nach Anspruch 8, wobei
(i) das Ausbringen durch Besprühen erfolgt; und/oder
(ii) von 0,025 bis 2 kg/ha der Verbindung ausgebracht werden; und/oder
(iii) das Ausbringen vor einem Befall durch das Pflanzenpathogen erfolgt; und/oder
(iv) die Alkylphospholipide, Lyso-Phospholipide und deren Salze in der ausgebrachten Lösung eine Konzentration von wenigstens 0,0001 % (w/v), bevorzugt von wenigstens 0,001 % (w/v) aufweisen.

10. Verwendung eines oder mehrerer Alkylphospholipide oder Lysophospholipide oder ihrer Salze wie in Ansprüchen 1 bis 5 definiert zur Bekämpfung von Erregern von Pflanzenkrankheiten.

11. Mittel zur Bekämpfung von Erregern von Pflanzenkrankheiten, enthaltend eine wirksame Menge mindestens eines Alkylphospholipids oder Lysophospholipids oder eines ihrer Salze wie in Ansprüchen 1 bis 5 definiert.

12. Mittel nach Anspruch 11, welches ein Mittel zur Bekämpfung von Pilzen, Oomyceten, Viren und/oder Bakterien ist und/oder wenigstens einen Formulierungshilfsstoff enthält.
